# EUROPEAN PATENT APPLICATION

(11) **EP 4 559 556 A1**
(43) Date of publication of application: **28.05.2025**
(21) Application number: 23212173.1
(22) Date of filing: 27.11.2023
(51) Int. Cl.: B01D 46/00, B01D 46/121, B01D 46/52

(54) **AIR FILTER AND FILTER UNIT FOR THE AIR FILTER**

(71) Applicant: MANN+HUMMEL LIFE SCIENCES & ENVIRONMENT HOLDING SINGAPORE PTE. LTD., Singapore 139234 (SG)
(72) Inventor: WARTH, Tobias, 71636 Ludwigsburg (DE); MÜLLER, Thorsten, 71636 Ludwigsburg (DE); PEMSEL, Thomas, 71636 Ludwigsburg (DE); WEISS, Dieter, 71636 Ludwigsburg (DE); PEKNY, Peter, 71636 Ludwigsburg (DE); FREMEREY, Peter, 71636 Ludwigsburg (DE)
(74) Representative: Mann + Hummel Intellectual Property

(57) **Abstract**

The invention relates to an air filter (1) comprising a filter housing (10), a blower (20) arranged in the filter housing (10) and serving to generate an air flow (2) from an air inlet (11) to an air outlet (12), a filter unit (50) arranged in an operating position between the air inlet (11) and the air outlet (12) in the filter housing (50), the filter unit (50) having: a) a plurality of filter elements (51), of which an outer filter element (51a) and a filter element (51b) adjacent thereto are arranged at an angle to one another and are connected to one another at a joint edge (52), and b) a first side holder (53) and a second side holder (54) which serve to fix the filter elements (51). The invention is characterised in that a first flap (58) of a flexible material is fixed to an outer end (57) of the outer filter element (51a) and extends parallel to the joint edge (52), the first flap (58) not being fixed over an entire width and having an unattached, free overhang (59) which, in the operating position of the filter unit (50), abuts a first abutment surface in a deformed state in which restoring forces of the flexible material press the projection (59) sealingly against the first abutment surface. Furthermore, the invention relates to a filter unit (50) for the air filter (1).

## Description

The invention relates to an air filter with a filter housing and with a filter unit arranged in the filter housing. The invention further relates to a filter unit for such an air filter.

EP 4 245 999 A1 discloses an air filter with filter housing and filter unit. A blower is arranged in the filter housing, which serves to generate an air flow from an air inlet to an air outlet. The filter unit is arranged in an operating position between the air inlet and the air outlet. The filter unit comprises a plurality of plate-shaped filter elements, of which two adjacent filter units form a V. Thus, an outer filter element of the filter unit and a filter element adjacent thereto are also arranged in a V-configuration and enclose an angle of approximately 20°. The two filter elements are connected to each other at a joint edge. In order to hold the individual filter elements in said V-configuration, the filter unit comprises a first side holder and a second side holder which are spaced apart from each other. Between the side holders extend the individual filter elements, which are attached to the side holders.

In the air filter of EP 4 425 999 A1, the filter unit is arranged in front of the blower as seen in the direction of the air flow. For the air filter to work efficiently, a good seal must be ensured between the filter element and the filter housing. Otherwise, there is a risk that part of the airflow will flow past the filter unit through leaks and will not be filtered. Thus, unfiltered air can enter the blower and is then released back into the environment.

Since the filter unit can become clogged with filtered particles and the like during the operating time of the air filter, it is desirable that the filter unit can be easily removed from the housing and replaced with a new or uncleaned filter unit. However, easy replacement of the filter unit and at the same time a good seal are usually conflicting objects. In addition, the filter unit should be simple and inexpensive if it is only a replacement part that is disposed of after use.

The invention is based on the object to provide an air filter that works efficiently and is easy to handle.

The object underlying the invention is solved with the combination of features according to claim 1. Embodiments of the invention can be taken from the subclaims to claim 1.

According to the invention, it is provided that a first flap of a flexible material is fastened to an outer end of the outer filter element, which flap runs parallel to the joint edge, the flap not being fastened over an entire width and having an unattached, free overhang which, in the operating position of the filter unit, abuts a first abutment surface. The overhang is in a deformed state in which restoring forces of the flexible material press the overhang against the first abutment surface. The fact that the overhang or the non-fixed part of the flap rests with a certain force against the first abutment surface makes it easy to achieve a good and secure seal between the filter unit and the filter housing.

In one embodiment, a length of the flap is greater than the width of the flap by at least a factor of 5. The portion of the flap attached to the outer end of the outer filter element may be 20 to 80% of the total width of the flap.

Preferably, the flexible material is a non-woven material. Alternatively, the flexible material may be plastic or other flexible material. The flexible material can be attached to the outer end of the outer filter element, for example, by gluing. The thickness of the flap (or the non-woven), the width of the overhang and/or the choice of the material used can be used to adjust the flexibility of the overhang and thus the force with which the overhang is pressed against the first abutment surface in the deformed state.

The first side holder and the filter housing may have a latching lug and a latching recess. In a locked state, the connection between the latching lug and the latching recess holds the filter unit in the operating position. The latching lug can be part of the first side holder. It is also possible that the latching lug is associated with the filter housing.

In one embodiment, the first side holder is made of a plastic that is semi-flexible. Preferably, polyurethane is used, which can be produced by reacting an isocyanate component with a polyol component. The first side holder is preferably an injection moulded part.

The second side holder preferably has the same features and characteristics as the first side holder. In one embodiment, the first side holder and the second side holder are mirror symmetrical to a central axis of the filter unit.

In the interior of the filter housing, a frame can be provided with a flow cross-section that is substantially completely covered by a base of the filter unit. The frame may be rectangular. A first side edge of the frame may form the first abutment surface. The frame may be fixedly connected to outer walls of the housing. For example, the frame may be part of a blower carrier by which the blower is fixed in the interior of the housing.

The frame can have a second side edge which is preferably perpendicular to the first side edge and forms a second abutment surface which, in the operating position of the filter unit, faces an outer surface of the first side holder. An elongated sealing rib can be provided on the outer surface of the first side holder, which rests against the second abutment surface and thus ensures a seal at this side edge. The sealing rib and a base body of the first side holder are preferably formed in one piece, which simplifies the manufacture of the first side holder.

The sealing rib can run over an entire length of the outer surface and form a sealing ridge at an end edge of the first side holder, which abuts the first abutment surface in an edge section in the operating position of the filter unit. The edge section adjoins, preferably without a gap, the middle or main section of the first side edge in which the (non-woven) flap rests against the first abutment surface. A sealing ridge of the second side holder can also lie against the first abutment surface.

In order to further strengthen the seal at the second side edge, the first side holder can have a sealing lip with a free end that rests against an inclined portion of the second abutment surface. Thus, in an embodiment, both the sealing rib and the sealing lip are in contact with the second abutment surface, resulting in a particularly good seal. Preferably, the sealing lip extends over the entire length of the first side holder. The sealing rib and the sealing lip can run parallel to each other and be only a small distance apart (less than 4 cm, for example).

In one embodiment, the rectangular frame is symmetrical, with a third side edge corresponding to the first side edge and a fourth side edge corresponding to the second side edge. The first side edge and the third side edge are spaced apart and run parallel to each other. The second side edge and the fourth side edge run transversely thereto. Preferably, the filter unit has a corresponding symmetry. In particular, it has a second flap which cooperates with the third abutment surface and corresponds to the first flap in structure and function.

At least one guiding rib with a rear latching surface may be provided on a side wall of the filter housing, behind which the flap engages when the operating position is reached during insertion into the filter housing of the filter unit. The guiding rib may extend from an inner wall of the side wall towards the interior of the housing. When the filter unit is inserted, the overhang of the flap slides along the guiding rib. At the end, the guiding rib may have a ramp, whereby the overhang is further deformed. After passing the ramp, the flap then engages behind the rear latching surface.

In one embodiment, the filter insert is held in the operating position mainly by the latching connection of latching lug and latching recess described above.

Preferably, several guiding ribs are provided that run parallel to each other. For example, five to ten parallel guiding ribs per side wall can be provided.

A further object of the invention, the provision of a filter unit for the air filter described above, is solved by claim 11.

The filter unit according to the invention is for use in an air filter, in particular in an air filter of claims 1 to 10, wherein the air filter comprises the filter housing and the blower arranged in the filter housing for generating an air flow in the filter housing. The filter unit according to the invention comprises a plurality of filter elements, of which the outer filter element and the filter element adjacent thereto are arranged in a V-shape and are connected to each other at a joint edge. The filter unit further comprises the first side holder and the second side holder, between which the filter elements extend in the direction of the joint edge. At the outer end of the outer filter element, the first flap of a flexible material is attached, which runs parallel to the joint edge. The flap is not fixed over the entire width, but has the unattached, free overhang. In an operating position of the filter unit in the filter housing, the overhang serves to lie against the first abutment surface of the air filter in a deformed state, in which the restoring forces of the flexible material press the overhang sealingly against the first abutment surface.

Embodiments of the filter unit according to the invention can be taken from the above description of the air filter according to the invention, in which in particular various embodiments of the filter unit are described.

The invention is explained in more detail with reference to the example embodiment shown in the drawing. It is shown in:
- Figure 1: an air filter;
- Figure 2: the air filter of figure 1 in exploded view;
- Figure 3: a first perspective view of a filter unit of the air filter;
- Figure 4: another perspective view of the filter unit of Figure 3;
- Figure 5: shows a sectional view of the air filter of Figure 1;
- Figure 6: a latching connection with latching lug and latching recess;
- Figure 7 in: section a first abutment surface for the filter unit; and
- Figure 8 in: section a second abutment surface for the filter unit.

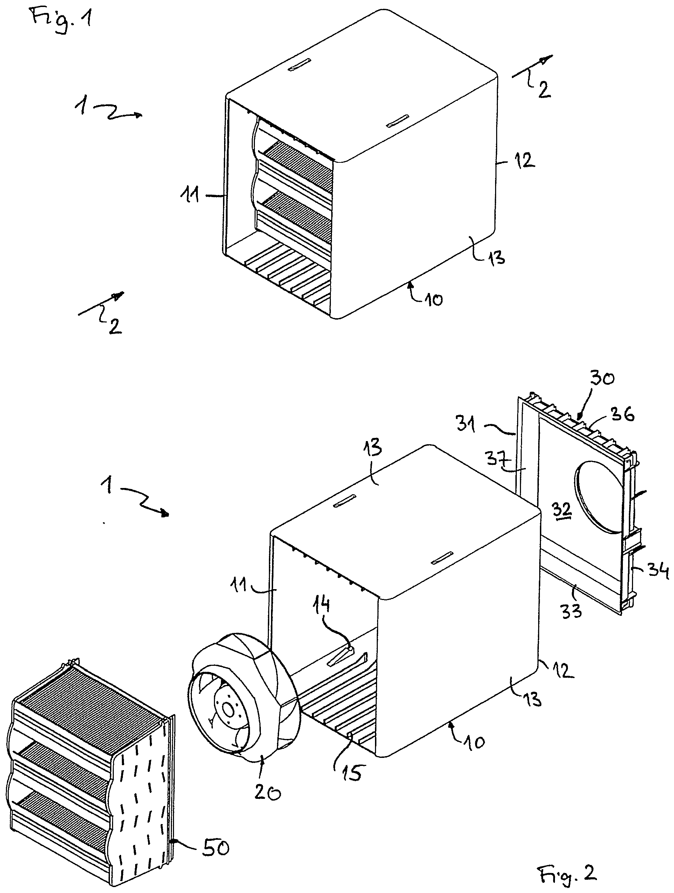

Figure 1 and Figure 2 show an air filter, referred to in its entirety as 1. The air filter 1 comprises a filter housing 10 and a blower 20 (see Figure 2), which is arranged in an installed position in the filter housing 10. The blower 10 generates an air flow in the filter housing 10 (see arrows 2), which enters the filter housing 10 at an air inlet 11 and leaves it at an air outlet 12.

A filter unit 50 is arranged in front of the blower 20 as seen in the direction of the air flow 2. The filter unit 50 can be slid into the filter housing 10, for example to replace a previously removed filter unit. The direction along which the filter unit 50 can be pushed into the filter housing 10 corresponds to the direction of the air flow 2. The cuboid housing 10 consists essentially of four side walls 13.

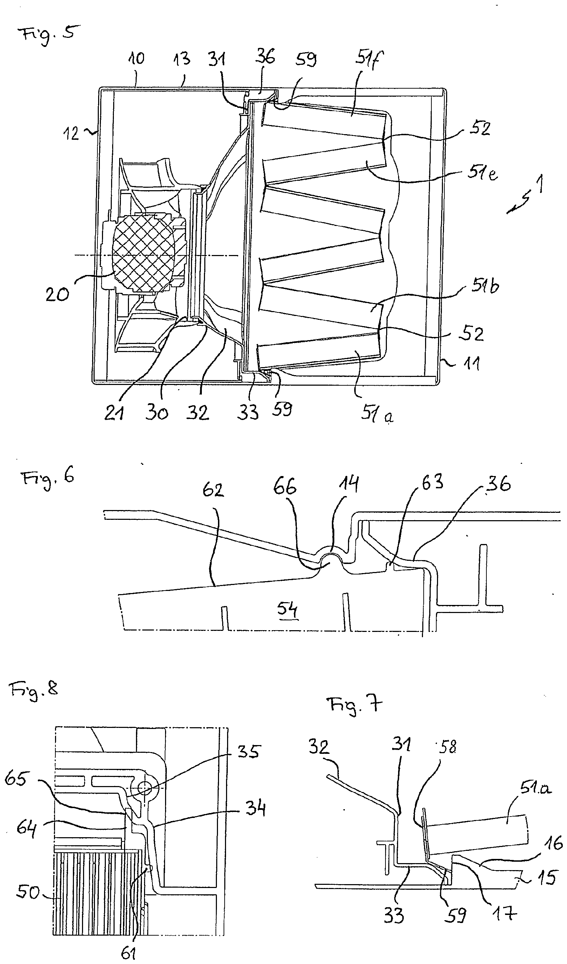

As can be seen in Figure 5, the blower 20 is held in position inside the filter housing 10 by a blower carrier 30. The blower carrier 30 has a frame 31 which is attached to the side walls 13 of the filter housing 10. Adjacent to the frame 31 is a funnel-shaped or frustoconical transition section 32, through which a flow cross-section of the frame 31, which is only slightly smaller than the flow cross-section of the filter housing 10, is reduced to a flow cross-section of an inlet 21 of the blower 20.

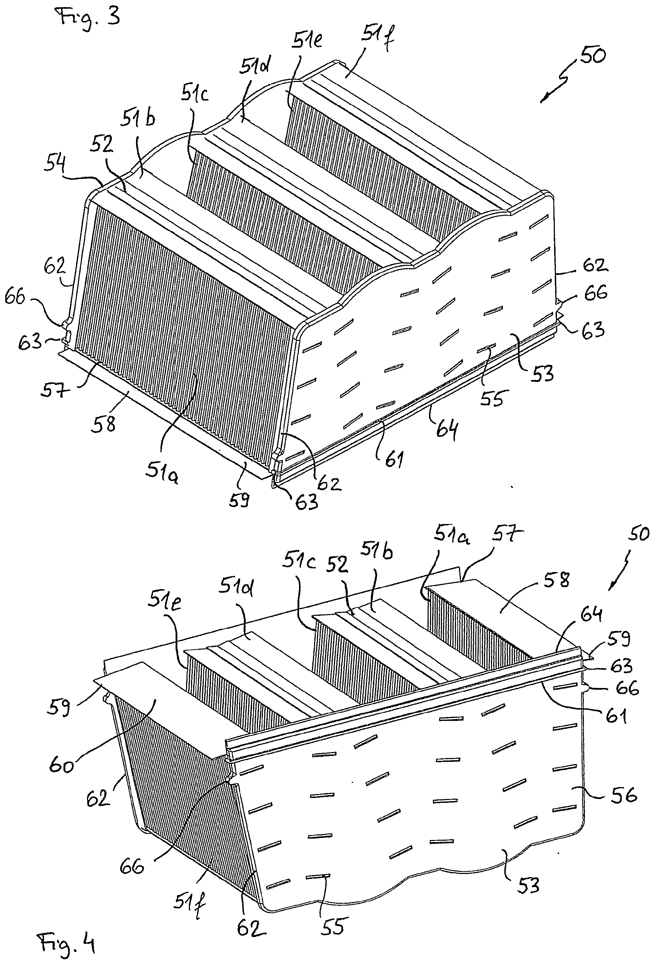

Figures 3 and 4 show the filter unit 50 in two perspective views. The filter unit 50 has six rectangular, plate-shaped filter elements 51, of which an outer filter element is designated 51a and a filter element adjacent to it is designated 51b (see also Figure 5). The other filter elements are designated with the reference signs 51c to 51f, whereby the filter element 51f represents an further outer filter element. The filter element 51a and the adjacent filter element 51b are connected to each other at a joint edge 52 and diverge from this edge 52 at an angle of approx. 20°. The filter elements 51a, 51b are thus arranged in a V-configuration. The remaining filter elements 51c to 51f are also arranged in such a V-configuration, whereby, for example, the filter element 51b forms with the outer filter element 51a a V open to the blower 20 or to the air outlet 12 and at the same time with the filter element 51c a further V, but now open to the air inlet 11.

To fix the filter elements 51a to 51f, a first side holder 53 and a second side holder 54 are provided, which are spaced apart from each other. A distance between the side holders 53, 54 corresponds to a length of the filter elements 51, which are held at the respective end faces by the two side holders 53, 54. Slots 55 in a base body 56 of the first side holder 53 serve to fix the filter elements 51 to the base body 56.

The second side holder 54 is mirror-symmetrical to the first side holder 53 and has the same structure. Components or details of the second side holder 54 are marked with the same reference signs as the corresponding components of the first side holder 53.

Attached to an outer end 57 of the outer filter element 51a is a first flap 58 of a flexible material which runs parallel to the joint edge 52. It is clear from Figures 3 and 4 that the first flap 58 is not attached to the outer end 57 over its entire width, but has an unattached free overhang 59.

A second flap 60 is attached to an outer end 57 of the other outer filter element 51f, which, like the first flap 58, has a free, unattached overhang 59. The function of the first flap 58 (applies mutatis mutandis to the second flap) is clear from Figures 5 and 7. Figures 5 and 7 show the filter unit 30 in an operating position in which the filter unit 30 is in sealing contact with the frame 31 of the blower carrier 30. The sealing contact of the filter unit 50 against the frame 31 ensures that the air drawn in by the blower 20 does not flow past the filter unit 50 and enter the blower 20 unfiltered.

A first side edge 33 of the frame 31 forms a first abutment surface against which the first flap 58 rests in the operating position of the filter unit 50 (see Figure 7). In particular, the overhang 59 rests against the first abutment surface in a deformed state, with elastic restoring forces pressing the overhang against the first abutment surface due to the deformation. Thus, a seal is provided between the filter element 50 and the frame 31 along the first side edge 33.

A second side edge 34 of the frame 31 runs perpendicular to the first side edge 33 (see Figure 2). In order to realise a seal between the filter unit 50 and the frame 31 also at this side edge 34, the first side holder 53 has a sealing rib 61 on an outer surface. The sealing rib 61 extends over the entire length of the first side holder 53 up to the two end edges 62 of the base body 56. At each of the end edges 62, the sealing rib 61 forms a sealing ridge 63. In addition, a sealing lip 64 is provided, which also serves to seal at the second side edge 35. From Figure 8, which shows a cutout of a cross-section transverse to this second side edge 35 and a cutout of the filter unit 50, it is clear that in the operating position of the filter unit 50 the sealing rib 61 rests against the second side edge 34. The small overlap between the sealing rib 61 and the second abutment surface in Figure 8 is intended to make it clear that the sealing rib 61 is in contact with the second abutment surface in a compressed form. The sealing lip 64, also shown with a small overlap in Figure 8, rests against an inclined portion 35. A free end 65 is pressed inwards, i.e. towards the opposite second side holder 54.

The frame 31 has a third side edge 36 and a fourth side edge 37 (see Figure 1), whereby the third side edge 36 corresponds to the first side edge 33 and the fourth side edge 37 corresponds to the second side edge 35. In the operating position of the filter unit 50, the second flap 60 interacts with the third side edge 38, whereby the overhang 59 is also pressed against the third side edge. As shown in Figure 8 for the second side edge 34, the fourth side edge interacts with the corresponding sealing rib 61 and sealing lip 64 of the second side holder 54. The flaps 58, 60 and the sealing rib 61 and sealing lip 64 of the two side holders 53, 54 thus form a circumferential seal between frame 31 and filter unit 50.

In order to hold the filter unit 50 in the operating position and to press it with a force against the frame 31, the first side holder 53 (and correspondingly also the second side holder 54) has a latching lug 66 on each end edge 62, which forms a latching connection with a corresponding latching recess 14 of the housing 10 (see Figure 6). The filter housing 10 has a total of four latching recesses 14, so that each of the four latching lugs 66 of the filter unit 50 (two latching lugs per side holder) interacts with a latching recess. One of the latching recesses 14 can be seen in Figure 1.

Figure 6 also shows that the sealing ridge 63 of the end edge 62 of the second side holder 54 is in contact with the third side edge 36 (the same applies to the corresponding sealing ridge 63 of the first side holder 53 or to the sealing ridges 63 of the opposite end edges 62 in interaction with the first side edge 34). The four sealing ridges 63 therefore complete the circumferential seal between frame 31 and filter unit 50.

Figure 1 shows that the - in the illustration of Figure 1 - lower side wall 13 has several parallel guiding ribs 15. The upper side wall 13 of the filter housing 10 also has such guiding ribs, but they are concealed in the illustration in Figure 1. A ramp 16 is provided at the end of each guiding rib 15 (see also Figure 7). When the filter unit 50 is pushed into the filter housing, the overhang 59 slides along the guiding ribs 15, is then further deformed by the ramp 16 shortly before reaching the operating position, and then engages behind a latching surface 17 of the guide ramp 16 after reaching the operating position. However, the filter unit 50 is held in the operating position mainly by the four latching connections with latching lug 66 and latching recess 14 described above. The side holders 53, 54 are made of a semi-flexible plastic such as polyurethane, so that on the one hand a good sealing effect is possible by means of sealing rib 61, sealing ridge 63 and sealing lip 64, and on the other hand a latching of the latching lug 66 in the latching recess 14 is possible.

### List of reference signs

- 1: air filter
- 2: airflow / arrow
- 10: filter housing
- 11: air intake
- 12: air outlet
- 13: side wall
- 14: latching recess
- 15: guiding rib
- 16: ramp
- 17: latching surface
- 20: blower
- 21: input
- 30: blower carrier
- 31: frame
- 32: transition section
- 33: first side edge
- 34: second side edge
- 35: inclined portion
- 36: third side edge
- 37: fourth side edge
- 50: filter unit
- 51: filter element (51a to 51f)
- 52: joint edge
- 53: first side holder
- 54: second side holder
- 55: slot
- 56: basic body
- 57: outer end
- 58: first flap
- 59: overhang
- 60: second flap
- 61: sealing rib
- 62: end edge
- 63: sealing ridge
- 64: sealing lip
- 65: free end
- 66: latching lug

## Claims

1. Air filter (1) comprising:
- a filter housing (10);
- a blower (20) arranged in the filter housing (10) and serving to generate an air flow (2) from an air inlet (11) to an air outlet (12);
- a filter unit (50) arranged in an operating position between air inlet (11) and air outlet (12) in the filter housing (50), the filter unit (50) comprising:
• a plurality of filter elements (51), of which an outer filter element (51a) and a filter element (51b) adjacent thereto are arranged at an angle to each other and are connected to each other at a joint (52), and
• a first side holder (53) and a second side holder (54) which serve to fix the filter elements (51),
**characterised in that** a first flap (58) of a flexible material is attached to an outer end (57) of the outer filter element (51a) and extends parallel to the joint edge (52), the first flap (58) not being attached over an entire width and having an unattached, free overhang (59) which, in the operating position of the filter unit (50), abuts a first abutment surface in a deformed state in which restoring forces of the flexible material press the overhang (59) sealingly against the first abutment surface.

2. Air filter (1) according to claim 1, **characterised in that** the first side holder (53) and the filter housing (50) comprise a latching lug (66) and a latching recess (14), wherein in a locked condition the connection between the latching lug (66) and the latching recess (14) hold the filter unit (50) in the operating position.

3. Air filter (1) according to one of claims 1 to 2, **characterised in that** a frame (31) with a flow cross-section is provided in the interior of the filter housing (10), which cross section is substantially completely covered by a base of the filter unit (50), wherein a first side edge (33) of the frame (31) forms the first abutment surface.

4. Air filter (1) according to claim 3, **characterised in that** the base is rectangular.

5. Air filter (1) according to claim 3 or 4, **characterized in that** the frame (31) has a second side edge (34) perpendicular to the first side edge (33) and forms a second abutment surface facing the first side holder (53).

6. Air filter (1) according to claim 5, **characterised in that** an elongate sealing rib (61) is provided on the outer surface of the first side holder (53), which sealing rib (61) abuts against the second abutment surface in the operating position of the filter unit (50).

7. Air filter (1) according to claim 6, **characterized in that** the sealing rib (61) extends over an entire length of first side holder (53) and forms a sealing ridge (63) at an end edge (62), which sealing ridge (63) abuts the first bearing surface in the operating position of the filter unit (50).

8. An air cleaner (1) according to any one of claims 5 to 7, **characterised in that** the first side holder (53) comprises a sealing lip (64) having a free end (65) which abuts an inclined portion (35) of the second side edge (34).

9. Air filter (1) according to any one of claims 1 to 8, **characterised in that** on a side wall (13) of the filter housing (10) there is at least one guiding rib (15) with a rear latching surface (17) behind which the first flap (58) engages when, on insertion into the filter housing (10), the filter unit (50) reaches the operating position.

10. Air filter (1) according to any one of claims 1 to 9, **characterised in that** the flexible material is a non-woven.

11. A filter unit (50) for an air filter (1) comprising a filter housing (10) and a blower (20) disposed in the filter housing (10) for generating an air flow (2) in the filter housing (10), the filter unit (50) comprising:
- a plurality of filter elements (51), of which an outer filter element (51a) and a filter element (51b) adjacent thereto are arranged in a V-shape and are connected to each other at a joint edge (52), and
- a first side holder (53) and a second side holder (54) between which the filter elements (51) extend in the direction of the joint edge (52),
**characterised in that** a first flap (58) of a flexible material is attached to an outer end (57) of the outer filter element (51a) and extends parallel to the joint edge (52), the first flap (58) not being attached over an entire width and having an unattached, free overhang (59) which serves, in an operating position of the filter unit (50) in the filter housing (10), to lie against a first abutment surface in a deformed state in which restoring forces of the flexible material press the overhang (59) sealingly against the abutment surface.
